# EUROPEAN PATENT APPLICATION

(11) **EP 4 670 904 A1**
(43) Date of publication of application: **31.12.2025**
(21) Application number: 24185581.6
(22) Date of filing: 30.06.2024
(51) Int. Cl.: B23P 6/04

(54) **THE METHOD OF CRACK PROPAGATION STOPPING**

(71) Applicant: Technická Univerzita V Kosiciach, 04200 Kosice-Sever (SK)
(72) Inventor: Monková, Katarína, Pre ov (SK); Monka, Peter Pavol, Pre ov (SK)

(57) **Abstract**

The invention represents a method of increasing the service life of structures with an initiated crack through the controlled treatment of the root of the crack leading to the generation of compressive stresses in its vicinity preventing its further growth.

The danger of initial quasi-stable crack growth lies in the fact that tensile stresses acting at their roots promote propagation without normally recognizable manifestations. However, the gradual growth of such a crack will eventually result in a brittle fracture, which will cause an uncontrollable catastrophic failure of the structure. For the effective application of the invention, the existence of a method of identifying the presence of a crack in the structure and knowing the shape of the exact spatial localization of the crack are necessary conditions.

To identify the presence of a crack in the structure (1), as well as to determine the spatial topography of the crack, there are several applicable technical solutions, the choice of which is at the discretion of the operator of the structure. The most important prerequisite for the safe use of a critical structure is a system for identifying the initiation, presence and propagation of a crack. Immediately after recognizing the presence of a crack (2) in the structure, it is necessary to identify its location.

After identifying the spatial location and arrangement of the crack, it is possible, based on the invention, to generate a temperature increase located in the immediate vicinity of the crack root (3) through a system of multiple beams of pulsed penetrating coherent radiation (4).

A narrowly localized significant increase in temperature in the immediate vicinity of the crack root leads to the attempt of the heated volumes to expand, which is prevented by the surrounding cold material. These opposing events create stresses that ultimately cause the stress at the crack root to transform from tensile (3) to compressive (6), resulting in the arrest of crack growth.

By applying the invention, it is possible to significantly increase the service life of constructions in which hitherto known methods cannot be implemented in an efficient manner.

## Description

### Field of invention

The invention relates to a method of increasing the service life of structures with an initiated crack by controlled treatment of the crack root preventing its further growth through thermal effects leading to a change in the stress ratios at the crack root. The invention falls into the areas of structures in engineering and construction.

### Background to the invention

Catastrophic failure of constructions made of technical materials is most often the result of unstable events occurring through the propagation of failure during loading - brittle fractures.

Through practical and theoretical approaches to solving the problem of brittle fracture, fracture mechanics was developed, which defined fracture criteria to avoid the initiation of brittle fracture during normal operation in structures with defects.

The basic up-to-date information source regarding reducing the probability of crack propagation is e.g. publication: Tagawa T et al: Brittle crack arrest behavior and its interpretation in an isothermal crack arrest test. Engineering Fracture Mechanics 2020, 235: 107130.

Knowledge about the possible principles of stopping propagating cracks has a very important technical, social and economic significance. This knowledge can be used to prevent cracks from spreading further to protect structures from damage that can lead to very serious societal consequences. Knowledge of the principles of crack propagation arrest generally points to the need to create compressive stresses near the crack root to arrest its propagation.

One such principle is the method of arresting using stop holes in front of cracks, described e.g. in the publication Wu H et al: On the prediction of the residual fatigue life of cracked structures repaired by the stop-hole method. Int. J Fatigue 2010, 32(4):670-677. However, the mechanism of arresting crack propagation through arresting holes on a propagating crack under dynamic loading is still not satisfactorily elucidated. An important practical insight is the fact that the time required to create capture holes in structures with initiated cracks may be too long to protect the structure from catastrophic damage.

Another principle of stopping crack propagation is the use of electromagnetic and thermal effects on the voltage distribution around the crack root in conductive materials due to the flow of electric current described e.g. in the publications Cai G.X., Yuan F.G.: Electric current-induced stresses at the crack tip in conductors. Int J Fracture 1999; 96: 279-301 and the aforementioned Tagawa T et al: Brittle crack arrest behavior and its interpretation in an isothermal crack arrest test. Engineering Fracture Mechanics 2020, 235: 107130. This principle utilizes the concentration of high electric current density near the crack roots causing a narrowly localized generation of high temperatures by the induced Joule heating effect and ultimately creating a stress state preventing further crack propagation.

### Summary of the invention

The invention is focused on the use of penetrating coherent electromagnetic radiation to achieve thermal effects leading to an appropriate distribution of stress at the root of the crack preventing its further propagation.

The effect of energy transformation of penetrating coherent electromagnetic radiation into thermal energy is described in several sources - e.g. Jangwoo Kim, Ki Hyun Nam: X-ray-Induced Heating in the Vicinity of the X-ray Interaction Point, Applied Sciences, 2023,13, 717, https://doi.org/10.3390/app13020717, or Krygier A. et al: X-ray source characterization and sample heating on x-ray diffraction experiments at the National Ignition Facility, Physics of Plasmas, AIP Publishing, Vol. 29, Issue 10, 2022. Publication Wenqian Hu et al: Energy transport analysis in ultrashort pulse laser ablation through combined molecular dynamics and Monte Carlo simulation, Phys. Rev. B 82, 094111 - Published 17 September 2010) points to another important physical principle used for the practical application of the invention - energy transfer when using coherent radiation working with ultrashort pulses does not take place based on the knowledge of classical physics, but the principles of quantum mechanics are applied. When an ultrashort pulse of coherent radiation with a high energy density interacts with the material, the energy transformed into heat is transferred to a significant extent through non-equilibrium electron transport, which enables much faster transport of thermal energy over short distances than by classical heat conduction in the material.

The last important physical principle used in the invention is the fact that penetrating coherent radiation shows several local extremes of the absorption spectrum of the processed materials - with non-penetrating coherent radiation, only one maximum is observed because the transformation of radiation energy into other forms of energy takes place on a very limited volume on the surface of the interacted material. This principle is for coherent radiation impenetrable in technical materials described when they are used in a transparent material, e.g. in the publication Molly Subhash H., Wang R.: Optical Coherence Tomography: Technical Aspects, ISBN 978-3-642-28390-1. Springer-Verlag Berlin Heidelberg, 2013, DOI 10.1007/978-3-642-28391-8_5.

The essence of the method of treating the roots of cracks according to the invention is characterized by the following steps:
- identification of the existence of a crack in the structure and definition of its spatial topography through suitable technical means - for example, computer tomography,
- application of penetrating coherent radiation provided by a system of two or more beams with a wavelength in the range of 0.5 - 10 nanometres, while the volume of penetration of this system of beams contains the root of the crack and each of the beams supplies energy in a subcritical amount to supply energy in the path of individual beams, which is not capable of transformation to a temperature that negatively affects the material structure,
- time duration when applying the transformation of beam energy to thermal, localised at the root of the crack, ensuring heating to a temperature sufficient to generate the resulting compressive stresses through dynamic events in the volume of the material caused by large gradients of mechanical stress (because of the rapid heat-activated expansion and subsequent contraction of the microvolumes of the material) in very localised volumes around the crack.

The above-described method of treating the root of the crack can be applied to all technical materials used in engineering and building constructions known to date.

The essence of the invention is based on the rapid heating of small volumes of material in the immediate vicinity of the crack root by generating an appropriately controlled thermal field through the energy supplied by a system of penetrating coherent radiation beams. These volumes try to expand in a natural way by heating, but the surrounding cold material prevents this, which generates the creation of a state of tension, which, after subsequent cooling, is manifested by final compressive stresses at the root of the crack.

An appropriately controlled thermal field is defined by the following characteristics:
- Energy is delivered through penetrating coherent radiation in a group formed by two or more beams creating a thermal field;
- Each of the beams delivers an amount of energy in a value that is in a subcritical amount in terms of the ability to heat the material outside the crack, which would cause unwanted changes in the properties of this material;
- By combining the energy of a group of rays into a thermal field, a supercritical amount of energy is created, with which volumes of material in the immediate vicinity of the root of the crack are quickly heated and subsequently cooled by heat dissipation into the surrounding material;
- the sharp increase of limited volumes in the area of the crack root due to thermal expansion takes place in the limiting conditions of the surrounding cold material, which resists the enlargement of small volumes located around the crack root, and thus a compressive stress state is generated in the crack root, which prevents further crack enlargement - this means the crack growth is stopped and the danger of catastrophic failure of the structure is eliminated.

The advantages of the method of stopping the propagation of a crack in constructions according to the invention are apparent from its effects, which are manifested externally. The novelty (inventive steps) of this approach consists in the use of a physical principle that differentiates the invention from solutions falling under the current state of the art.

This principle is the use of penetrating coherent radiation of a system of multiple interconnected beams for thermal effects generated dynamic mechanical stress influencing the material in the immediate vicinity of the root of the identified crack leading to the induction of resulting compressive stresses that prevent further growth of the crack.

The technical solution based on the invention is an important inventive step in increasing the service life through the protection of structures with an identified crack against the catastrophic course of its propagation and the collapse of the structure.

### Brief description of the drawings

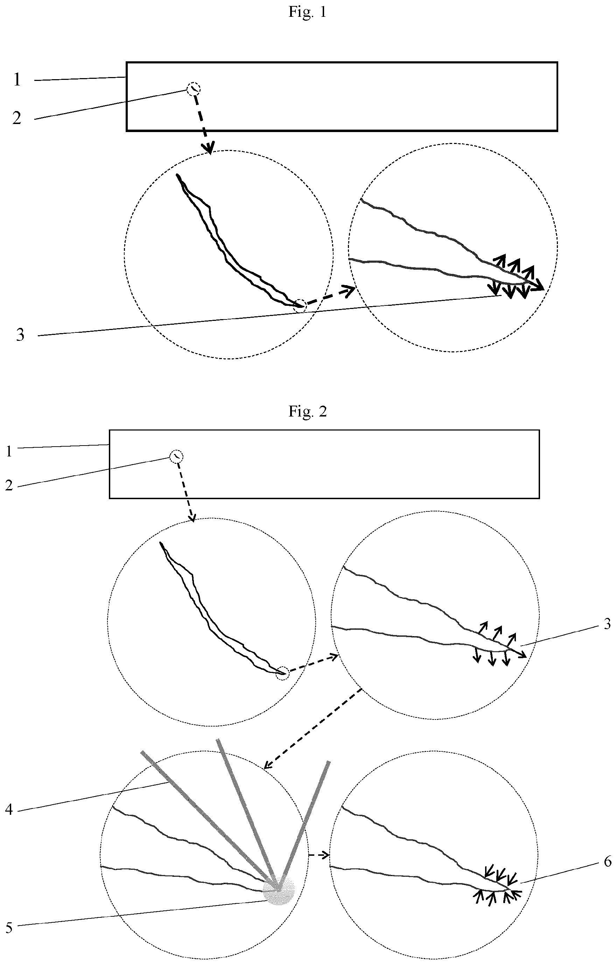

The method of protection of structures with an identified initiated crack according to the invention is explained in the drawings where in fig. 1 shows the identified crack (2) in the structure (1) and the mechanical stress conditions around its root (3). These stress ratios at the root create tensile stresses that create suitable conditions for further crack enlargement (propagation), which usually leads to a characteristic fracture with signs of brittle failure. In figure 2 shows an example of treating the root of an identified crack by means of a temperature field (5) generated by a penetrating coherent radiation beam system (4). The original tensile stress pattern at the root of the crack (3) is changed to a compressive one by the treatment (6), which leads to the arrest of crack propagation.

### Detailed description

The given examples of the implementation of the invention are illustrative and do not define the limitations of other possible solutions using the principles of the invention. Those skilled in the art will be able to ascertain equivalent arrangements of the invention using no more than routine experimentation. Even such equivalents fall within the scope of patent claims.

### Example 1

In this example of a specific embodiment, a method of treating the root of a crack on large-scale steel structures, such as drilling rigs, roof beams, heavy production machinery, etc., to extend their service life, is described. The method includes the steps:
- provision of a system for non-destructive identification of crack development in the structure, e.g. ultrasonic systems, or acoustic emission systems, through which it is possible to recognize the initiation and development of a crack in the initial stages,
- identification of the location of the crack on the structure,
- defining the spatial topography of the crack to determine the positions of its root,
- application of a temperature field to the root of the crack through pulse penetrating coherent radiation provided by a system of multiple beams with a wavelength in the range of 0.5 - 10 nanometres, while the volume of penetration of this system of beams contains the root of the crack and each of the beams delivers energy in a subcritical amount of 10⁴ - 10⁵ Wcm ⁻² to deliver energy in the path of the individual beams that is not capable of transformation into a temperature that negatively affects the material structure between the surface of the structure and the root of the crack,
- duration of time when applying the temperature field so that the average temperature in the immediate vicinity of the crack root does not exceed 0.75 times the melting temperature (in °K) of the given steel,
- internal dynamic mechanical stress processes caused by the thermal expansion of the material in the immediate vicinity of the crack and the simultaneous resistance to this expansion in the surrounding material will create the final result in the form of compressive stresses in the root, which will stop the further growth of the crack.

### Example 2

In this example of a specific embodiment, the method of treating the root of a crack on critical parts of machinery, such as e.g. shafts, gears, etc. The method includes the steps:
- non-destructive identification of a component crack, e.g. capillary method of surface cracks, ultrasonic testing, computer tomography, etc.,
- defining the spatial topography of the crack to determine the positions of its root,
- application of a temperature field to the root of the crack through pulse penetrating coherent radiation provided by a system of multiple beams with a wavelength in the range of 0.5-10 nanometres, while the volume of penetration of this system of beams contains the root of the crack and each of the beams delivers energy in a subcritical amount of 10⁴ (light metals ) - 10⁶ Wcm⁻² (heavy metals), in order to deliver energy in the path of individual beams that is not capable of transformation into a temperature that negatively affects the material structure between the surface of the structure and the root of the crack,
- duration of time when applying the temperature field so that the temperature in the immediate vicinity of the crack root does not exceed 0.75 times the melting temperature (in °K) of the material of the given component,
- internal dynamic mechanical stress processes caused by the thermal expansion of the material in the immediate vicinity of the crack root and the simultaneous resistance to this expansion in the surrounding material will create the final result in the form of compressive stresses in the root, which will stop the further growth of the crack.

### Industrial applicability

The industrial applicability of protecting structures by stopping crack propagation and increasing service life according to the invention is mainly in construction and mechanical engineering, but the use is general in all areas using extensive structures.

## Claims

1. A method of increasing the service life of structures with an initiated crack, **characterized in that** it is implemented by stopping the propagation of an initiated crack through a thermally generated change in mechanical stress ratios in the region of the crack root by the energy of pulsed electromagnetic penetrating coherent radiation carried out in the following steps:
a. identification of the existence of a crack in the structure by non-destructive methods and defining the spatial location of its roots through appropriate technical means,
b. application of penetrating coherent radiation provided by a system of two or more beams of electromagnetic radiation with a wavelength in the range of 0.5 nanometres (light construction materials) - 10 nanometres (heavy metals and their alloys) with an energy density (Heat flux) in the range of 10³ Wcm⁻² (light structural materials) up to 10⁶ Wcm⁻² (heavy metals and their alloys), where the penetration volume of this beam system contains the root of the crack and each of the beams delivers a subcritical amount of energy to deliver an amount of energy in the individual beam path that is not able to transform to a temperature that negatively affects the material structure of the structure,
c. time duration when applying the temperature field to reach the temperature in the immediate vicinity of the crack root in the range ensuring dynamic mechanical stress processes resulting in the creation of the final compressive stress state in the vicinity of the crack root.

2. A method of increasing the service life of structures with an initiated crack, **characterized by** the fact that the time duration during the application of the temperature field for metal-based materials lasts long enough to reach the average temperature in the immediate vicinity of the crack root in the range of 0.65 to 0.75 times melting temperature (in °K) of material with a crack, during which dynamic mechanical stress processes will occur resulting in the creation of a final compressive stress state in the vicinity of the crack root.
